# EUROPÄISCHE PATENTSCHRIFT

(11) **EP 4 616 031 B1**
(45) Veröffentlichungstag und Bekanntmachung des Hinweises auf die Patenterteilung: **03.06.2026**
(21) Anmeldenummer: 22813565.3
(22) Anmeldetag: 07.11.2022
(51) Int. Cl.: E01C 11/22, B60L 53/30

(54) **BORDSTEIN- ODER RANDSTEIN-LADEVORRICHTUNG ZUM LADEN EINES ENERGIESPEICHERS EINES ELEKTRISCH ANGETRIEBENEN FAHRZEUGS**
KERB CHARGING DEVICE FOR CHARGING AN ENERGY STORE OF AN ELECTRICALLY DRIVEN VEHICLE
DISPOSITIF DE CHARGE DE BORDURE PERMETTANT DE CHARGER UN ACCUMULATEUR D'ÉNERGIE D'UN VÉHICULE À ENTRAÎNEMENT ÉLECTRIQUE

(43) Veröffentlichungstag der Anmeldung: 17.09.2025
(73) Patentinhaber: Pierburg GmbH, 41460 Neuss (DE)
(72) Erfinder: STRACKE, Felix, 41460 Neuss (DE); HEMSING, Axel, 41460 Neuss (DE); HOFFMANN, Jens, 41460 Neuss (DE); BRETZ, Andreas, 41460 Neuss (DE)
(74) Vertreter: Bardehle Pagenberg Partnerschaft mbB Patentanwälte Rechtsanwälte
(86) Internationale Anmeldenummer: PCT/EP2022/080964
(87) Internationale Veröffentlichungsnummer: WO 2024/099532

(56) Entgegenhaltungen:
- FR-A- 673 304
- GB-A- 2 597 742
- GB-A- 2 602 632
- US-A1- 2007 086 856

## Beschreibung

Die Erfindung betrifft eine Bordstein- oder Randstein-Ladevorrichtung zum Laden eines Energiespeichers eines elektrisch angetriebenen Fahrzeugs mit einem Basiselement, welches aus einem oder mehreren der Materialien Beton, Naturstein, Kunststoff und Verbundwerkstoff hergestellt ist und einen Aufnahmeraum aufweist, und einem Verstärkungselement, das am Basiselement befestigt ist und den Aufnahmeraum an zumindest einer Seite zumindest teilweise begrenzt, und einer Ladeeinheit, die im Aufnahmeraum angeordnet ist.

Derartige Bordstein- oder Randstein-Ladevorrichtungen sind im Bordstein, oder Randstein integrierte Aufladestationen, an welche Fahrzeuge über eine elektrische Verbindung angeschlossen werden können, um deren Energiespeicher beziehungsweise deren Batterien aufzuladen. Dies betrifft insbesondere rein elektrisch angetriebene Fahrzeuge aber auch Hybridfahrzeuge. Aufladbare Fahrzeuge können sowohl Personenkraftwagen als auch Lastkraftwagen, Motorräder oder elektrische Fahrräder sein.

Durch die neue Gesetzgebung, das steigende Klimaschutzinteresse der Bevölkerung sowie die verbesserte Wirtschaftlichkeit elektrifizierter Fahrzeuge ist zu erwarten, dass der Anteil elektrischer Fahrzeuge insbesondere in den innerstädtischen Bereichen extrem steigen wird, so dass die zur Verfügung stehende Ladeinfrastruktur in hohem Maße ausgebaut werden muss, was bedeutet, dass ein Teil vorhandener Parkplätze mit entsprechenden Auflademöglichkeiten versehen werden muss, um die individuelle Mobilität auch in Zukunft sicherzustellen.

Bekannte Konzepte sehen hierfür die Nutzung von Straßenlaternen, zusätzlich zu installierende Ladesäulen oder Wallboxen an Hauswänden vor. Bei allen diesen Konzepten entsteht zusätzlicher Platzbedarf und eine Störung der Fußgänger durch die zu verwendenden Aufladekabel.

Aus diesem Grund sind Ladesysteme bekannt geworden, bei denen die Aufladevorrichtungen in den Bordstein beziehungsweise den Randstein integriert sind. Dies hat den Vorteil, dass keine Ladesäulen die Gehsteige versperren und so den optischen Eindruck stören. Stattdessen entsteht kein zusätzlicher Platzbedarf, sondern lediglich eine Nutzung ohnehin vorhandener Infrastruktur. Es besteht eine hohe Flexibilität und Nachrüstbarkeit durch mögliche Modularisierung. Auch kann Beschädigungen der Ladeinfrastruktur durch Unfälle mit Fahrzeugen vorgebeugt werden.

Entsprechend wird in der DE 10 2017 218 947 A1 vorgeschlagen, eine Ladevorrichtung zum Laden von Fahrzeugen im Bordstein einer Straßenbegrenzung anzuordnen. Der Bordstein wird entweder mit einer Energiezuführung ausgebildet oder weist eine eigene Energiespeichereinheit auf.

Aus GB 2 597 742 A ist eine Bordstein-Ladevorrichtung bekannt, bei der die Engergiezuleitung in einem rohrförmigen separaten Element geschützt untergebracht ist, das in einem Bordstein-Grundkörper eingesetzt ist.

Eine spezielle Ausbildung eines solchen Bordsteins mit Elektronik zum Laden eines Fahrzeugs ist aus der GB 2 592 186 A bekannt. Dieser Bordstein ist modular aufgebaut und weist ein Basiselement auf, in welches ein Aufnahmebehälter einsetzbar ist, der ausgetauscht werden kann und entsprechend nicht befestigt ist. In diesem Behälter sind die Bauteile zum elektrischen Aufladen einer Batterie eines Fahrzeugs angeordnet. Der Aufnahmebehälter ist nach oben offen und wird durch einen Deckel verschlossen, der das Basiselement zur Straße hin durch eine schräg ausgebildete Wand begrenzt. Das Basiselement wie auch der Behälter und der Deckel werden aus Kunststoff hergestellt.

Problematisch an einem derartig ausgeführten Bordstein ist, dass keine ausreichende Haltbarkeit gegeben ist, da der Deckel mit dem Behälter bei einem Aufprall eines Fahrzeugreifens am Bordstein gegen das Basiselement verschoben wird und somit zunächst der Behälter und der Deckel belastet werden und anschließend diese Belastung schlagartig auf das Basiselement übertragen wird. Die auftretenden Zugkräfte können in einem solchen Bordstein nicht ausreichend aufgenommen werden, so dass es zu starken Verformungen und Brüchen kommen kann.

Des Weiteren ist aus der DE 696 01 306 T2 ein Bordstein aus einem Grundkörper aus Beton bekannt, an dessen Vorderseite eine Ausnehmung ausgebildet ist, in der ein Metallkanal angeordnet ist, der über Streben, die sich von den Kanalwänden in den Beton erstrecken, am Grundkörper befestigt ist. Der vorhandene Metallkanal kann jedoch nicht zur Aufnahme einer Ladeeinheit genutzt werden.

Es stellt sich daher die Aufgabe, eine Bordstein- oder Randstein-Ladevorrichtung zum Laden eines Energiespeichers eines elektrisch angetriebenen Fahrzeugs bereit zu stellen, welche eine hohe Haltbarkeit aufweist und so in einer großen Menge als Bordstein in Städten aber auch an Parkplätzen oder Autobahnraststätten verwendet werden kann, ohne dass eine stetige Wartung oder ein häufiger Austausch notwendig werden. Dabei soll sowohl die Elektronik im Behälter vor Schäden geschützt werden als auch die Funktion des Bordsteins selbst als Straßenbegrenzung erfüllt bleiben, an der keine Schäden und daraus folgend auch keine Schäden an den Autoreifen durch herausbrechende Teile des Bordsteins entstehen. Ein solcher Bordstein soll möglichst kostengünstig hergestellt werden können. Zusätzlich soll ein möglichst hohes Maß an Flexibilität vorhanden sein und die Montage möglichst einfach und fehlerfrei verlaufen. Die Bordstein- oder Randstein-Ladevorrichtung soll einfach in vorbereiteten Straßenzügen nachgerüstet werden können. Die Elektronik für die Wartung leicht entnehmbar sein und den vorhandenen Normen entsprechen. Des Weiteren soll eine hohe Dichtigkeit gegen ein Eindringen von Wasser und Schmutz erreicht werden.

Diese Aufgabe wird durch eine Bordstein- oder Randstein-Ladevorrichtung zum Laden eines Energiespeichers eines elektrisch angetriebenen Fahrzeugs mit den Merkmalen des Hauptanspruchs 1 gelöst.

Eine erfindungsgemäße Bordstein- oder Randstein-Ladevorrichtung zum Laden eines Energiespeichers eines elektrisch angetriebenen Fahrzeugs weist ein Basiselement auf, welches aus einem oder mehreren der Materialien Beton, Naturstein, Kunststoff, der auch faserverstärkt sein kann, und/ oder einem Verbundwerkstoff hergestellt ist. Unter Beton ist selbstverständlich auch ein ultrahochfester Beton (UHPC), faserverstärkter Beton oder ein Polymerbeton zu verstehen, bei dem statt des Bindemittels Zement ein Kunststoff als Bindemittel genutzt wird. Im Inneren des Basiselementes ist ein Aufnahmeraum ausgebildet. Um diesen zu begrenzen, weist das Basiselement zumindest einen Boden, zwei das Basiselement in Längserstreckungsrichtung begrenzende Seitenwände und eine sich in Längserstreckungsrichtung erstreckende Frontwand auf, deren äußere Wandfläche im eingebauten Zustand einen Fahrweg oder Parkplatz seitlich begrenzt, und deren innere Wandfläche zum Aufnahmeraum weist. Bei Verwendung eines Basiselementes als Randstein kann dieser beispielsweise einen Parkplatz nach vorne begrenzen. Bei Verwendung als Bordstein erstreckt sich die Frontwand entsprechend parallel zur Straße, während die Enden der Seitenwände jeweils gegen einen benachbarten Bordstein anliegen.

Im Aufnahmeraum ist eine Ladeeinheit angeordnet. Unter Ladeeinheit ist in diesem Zusammenhang sowohl lediglich eine Ladebuchse oder ein induktiver Lader oder eine komplett autarke Ladeeinheit zu verstehen, welche lediglich einen Stromanschluss benötigt und alle elektronischen Bauteile in sich birgt. Selbstverständlich können auch einzelne elektronische Bauteile der Ladeeinheit, wie ein Energiezähler, Ladecontroller oder ähnliches in dem Aufnahmeraum angeordnet sein. Unter Ladeeinheit wird entsprechend jedes einzelne Bauteil oder mehrere Bauteile verstanden, die dazu dienen können, den Energiespeicher des elektrischen Fahrzeugs oder des Hybridfahrzeugs zu laden.

Des Weiteren weist die erfindungsgemäße Bordstein- oder Randstein-Ladevorrichtung ein Verstärkungselement auf, das am Basiselement befestigt ist und den Aufnahmeraum an zumindest einer Seite zumindest teilweise begrenzt, wobei das Verstärkungselement zumindest eine Verstärkungsplatte aufweist, welche gegen die innere Wandfläche der Frontwand anliegt und an der Frontwand befestigt ist. Diese Platte kann auch Versteifungsrippen aufweisen oder als L-Profil ausgebildet sein, dessen zweiter Schenkel über die Oberseite der Frontwand ragt und auf dieser aufliegt.

Die zur Straße weisende Fläche der Bordstein- oder Randstein-Ladevorrichtung wird somit weiterhin durch den Beton oder Kunststoff des Basiselementes gebildet, was sich als Bordsteinaußenfläche über viele Jahre bewährt hat. Die nunmehr aufgrund des Aufnahmeraums deutlich dünnere Frontwand wird nunmehr erfindungsgemäß durch das Verstärkungselement in seiner Haltbarkeit deutlich verbessert. Die Haltbarkeit und Festigkeit der zur Straße weisenden Frontwand wird im Wesentlichen im Vergleich zu Vollbordsteinen erhalten, da diese Wand vor allem gegen Zugkräfte empfindlich ist, die an der zum Aufnahmeraum gewandten Seite der Frontwand, beispielsweise beim Aufprall eines Fahrzeugs gegen den Bordstein wirken, und welche nunmehr durch das Verstärkungselement und dessen Anbindung an die Frontwand aufgenommen werden können. Durch die Seitenwände werden auch innerhalb des Basiselementes Kräfte zum Fundament abgeleitet und eine deutlich erhöhte Stabilität des Basiselementes erreicht.

Bei den Begriffen oben, unten, Frontwand, Rückwand, Oberseite, Boden, Seitenwände und ähnlichem ist immer der Bordstein oder der Randstein im an der Straße eingebauten Zustand mit seiner entsprechenden Ausrichtung zu verstehen.

Vorzugsweise deckt ein Deckel aus Metall, einem faserverstärkten Kunststoff oder einem andere Verbundmaterial eine offene Seite des Aufnahmeraums und einen an die offene Seite des Aufnahmeraums angrenzenden Bereich einer Oberseite der Seitenwände des Basiselementes und eine Oberseite der den Aufnahmeraum begrenzenden Frontwand ab. Durch diese zumindest dreiseitige Auflage des Deckels können Belastungen beispielsweise durch Fahrzeugreifen aufgenommen und gleichmäßig in den Bordstein eingeleitet werden. Es entsteht so eine Bordstein- oder Randstein-Ladevorrichtung mit hoher Festigkeit, da auch über kleine Flächen eingeleitete Kräfte immer im Bordstein über mehrere mit dem Fundament verbundene Flächen verteilt abgeleitet werden können. Der Deckel wird dabei vorteilhafterweise über Schrauben am Basiselement befestigt. So wird eine Relativbewegung des Deckels zum Basiselement zuverlässig verhindert. Des Weiteren wird ein Austausch der Elektronik im Aufnahmeraum ermöglicht. Entsprechend wird eine zusätzliche feste Verbindung des Deckels zum Basiselement geschaffen, durch welche Relativbewegungen ausgeschlossen werden und eine Krafteinleitung immer auf die gesamten Bordstein- oder Randstein-Ladevorrichtung verteilt wird. Der Deckel ist insbesondere aus Stahl beziehungsweise Edelstahl hergestellt. Der Deckel kann ein Sichtfenster oder eine Sichtöffnung sowie andere Öffnungen aufweisen, beispielsweise zur Sichtbarkeit einer Anzeige des Energiezählers oder für den Zugang zur Ladebuchse. Zusätzlich werden die Kräfte durch das Verstärkungselement und dessen Befestigungsflächen nach unten abgeleitet.

In einer bevorzugten Ausführungsform erstreckt sich das Verstärkungselement zumindest von einer Oberseite der inneren Wandfläche der Frontwand mindestens 20 mm in Richtung des Bodens entlang der inneren Wandfläche. Ein solches Verstärkungselement im oberen Bereich der Bordstein- oder Randstein-Ladevorrichtung hat sich als ausreichend erwiesen, um die notwendige Festigkeit herzustellen. Gleichzeitig werden die Kosten im Vergleich zu vollen Stahlbehältern deutlich reduziert. Dass sich das Verstärkungselement zumindest von der Oberseite aus erstreckt, bedeutet, dass es sich auch über diese Oberseite hinaus in Richtung des Deckels erstrecken kann, was insbesondere dann der Fall ist, wenn ein Dämpfungselement in Form einer Elastomerschicht zwischen dem Deckel und der Oberseite der Frontwand angeordnet wird.

Besonders bevorzugt ist es, wenn das Verstärkungselement gegen einen Absatz, der an der inneren Wandfläche der Frontwand ausgebildet ist, und eine zum Deckel weisende Anlagefläche bildet, anliegt. So können einerseits äußere Kräfte von der Deckelseite, die von oben auf das Verstärkungselement wirken, weitergeleitet werden und andererseits erfolgt eine zusätzliche Fixierung des Verstärkungselementes in Richtung der wirkenden Gravitationskraft, so dass die durch die Befestigungsmittel aufzunehmenden Scherkräfte verringert werden.

In einer alternativen Ausführung erstreckt sich das Verstärkungselement zumindest von der Oberseite der inneren Wandfläche der Frontwand bis zum Boden entlang der inneren Wandfläche. Die auftretenden Kräfte von oben können bei dieser Ausführung durch den Boden abgefangen beziehungsweise in diesen abgeleitet werden.

Vorzugsweise weist das Verstärkungselement die Verstärkungsplatte und zwei sich von den Enden der Verstärkungsplatte erstreckende Seitenplatten auf, die sich entlang einer Innenwandfläche der Seitenwände erstrecken. Entsprechend ist das Verstärkungselement im Querschnitt U-förmig ausgebildet. So können zusätzliche Kräfte, die in die Frontwand eingeleitet werden über die Seitenplatten abgefangen werden, wodurch die Stabilität der Bordstein- oder Randstein-Ladevorrichtung nochmals erhöht wird.

In einer weiterführenden Ausbildung der Erfindung erstreckt sich von den Enden der Seitenplatten parallel zur Verstärkungsplatte eine Rückwandplatte, über die die beiden Seitenplatten an zur Verstärkungsplatte gegenüberliegenden Enden miteinander verbunden sind, so dass ein umlaufender Verstärkungsring als Verstärkungselement gebildet ist. Dies erhöht die Stabilität des Verstärkungselementes, und damit die Stabilität der Bordstein- oder Randstein-Ladevorrichtung. Des Weiteren dient die Rückwandplatte als Begrenzung des Aufnahmeraums nach hinten, so dass ein Eindringen von Wasser oder Erdreich von dort verhindert werden kann.

Vorteilhaftweise erstrecken sich von den Seitenplatten flanschartige Erweiterungen in entsprechende Ausnehmungen in den Seitenwänden des Basiselementes, über die der Deckel mittels Schrauben befestigt ist. So kann auf einfache Weise eine kraftschlüssige Verbindung zwischen dem Verstärkungselement und dem Deckel hergestellt werden.

Vorzugsweise erfolgt die Befestigung des Verstärkungselementes im Basiselement durch Kleben oder Schrauben. Insbesondere erfolgt das Kleben großflächig über die anliegende innere Wandfläche der Frontwand und gegebenenfalls die Innenwandflächen der Seitenwände. Auf diese Weise werden immer eine großflächige Anlage und großflächige Verteilung auftretender Kräfte sichergestellt, was ebenfalls die Festigkeit verbessert. Zur Schraubbefestigung können im Basiselement beispielsweise eingegossene Gewindehülsen vorgesehen werden, welche sowohl in den Seitenwänden als auch an der Frontwand verankert sein können und ebenfalls zur Kraftverteilung und -ableitung dienen.

In einer alternativen Ausführungsform erfolgt die Befestigung des Verstärkungselementes durch Streben am Verstärkungselement, die in das Basiselement ragen. Bei dieser Ausführung werden die Streben des Verstärkungselementes, ähnlich wie bei Stahlbewehrungen vom Beton oder Kunststoff des Basiselementes des Bord- oder Randsteins umgossen. So kann ebenfalls eine feste Verbindung zum Basiselement hergestellt werden.

Der Aufnahmeraum ist vorzugsweise durch eine Rückwand aus Metall, Kunststoff oder Verbundmaterial begrenzt, die an Ausschnitten an den rückwärtigen Oberflächen der Seitenwände und gegebenenfalls am Boden, beispielsweise durch Kleben oder Schrauben befestigt ist. Auf diese Weise wird der Aufnahmeraum des Bord- oder Randsteins nach hinten zum Gehsteig geschlossen, so dass ein Eindringen von Schmutz beziehungsweise Erde und Sand von hinten verhindert wird.

Des Weiteren ist es vorteilhaft, wenn das Basiselement einen Rückwandabschnitt aufweist, welcher sich vom Boden des Basiselementes über ein Viertel bis drei Viertel der Höhe des Basiselementes nach oben in Richtung des Deckels erstreckt. So kann der Aufnahmeraum der Bordstein- oder Randstein-Ladevorrichtung teilweise durch den Rückwandabschnitt geschlossen werden, so dass keine zusätzliche Rückwand aus Metall notwendig ist, sondern der Aufnahmeraum durch den Rückwandabschnitt des Basiselementes und die Rückwandplatte des Verstärkungselementes nach hinten geschlossen wird. Dies erhöht die Steifigkeit und verringert die Herstellkosten.

In einer hierzu weiterführenden Ausführungsform erstreckt sich der Rückwandabschnitt des Basiselements im eingebauten Zustand unter eine Gehwegfläche. Somit wird durch den Rückwandabschnitt des Basiselementes der Aufnahmeraum in seiner Tiefe erhalten, ohne dass die sichtbare Tiefe des Bordsteins im eingebauten Zustand beeinflusst wird.

In einer weiterführenden Ausbildung begrenzt der Rückwandabschnitt des Basiselementes den Aufnahmeraum teilweise und die Rückwandplatte des Verstärkungselementes weist einen Anlageabschnitt auf, mit der die Rückwandplatte gegen eine Innenwandfläche des Rückwandabschnitts anliegt. Hier kann die Rückwandplatte entsprechend, insbesondere durch Kleben befestigt werden, so dass ein dichter Aufnahmeraum geschaffen wird.

Vorzugsweise deckt der Deckel eine im eingebauten Zustand zwischen der Oberseite und der äußeren Wandfläche der Frontwand ausgebildete Kante zumindest entlang der Längserstreckung des Aufnahmeraums vollständig ab, wodurch die empfindliche Kante, an der ein Aufprall eines Fahrzeugreifens zu erwarten ist, geschützt wird.

In einer weiterführenden Ausbildung der Erfindung weist der Deckel eine abgerundete Aufprallwand auf, welche das Basiselement im eingebauten Zustand am Übergang zwischen der Oberseite der Frontwand und der äußeren Wandfläche der Frontwand abdeckt. Durch die Abrundung werden Schäden am Fahrzeugreifen verhindert. Des Weiteren wird durch die Anordnung der Aufprallwand des Deckels im Übergangsbereich zwischen der Oberseite und der zur Straße gerichteten äußeren Wandfläche der Frontwand des Bordsteins unabhängig von der Fahrzeuggröße und somit von der Reifengröße ein erster Kontakt unabhängig davon, ob dieser von der Seite oder eher von oben kommt, immer sicher vom Deckel aufgenommen und entsprechend großflächig abgeleitet.

Der Deckel liegt vorteilhafterweise unter Zwischenlage einer Dichtung oder einer Elastomerschicht gegen die Frontwand, die Seitenwände und/oder das Verstärkungselement an. Dies sorgt für eine flächigere Verteilung und Dämpfung der eingeleiteten Kräfte auf die Seitenwände und die Frontwand des Basiselementes bei Durchbiegung des Deckels. Die Dichtung verhindert ein Eindringen von Wasser oder Schmutz und kann am Deckel, am Basiselement oder am Verstärkungselement angebracht werden.

Auch ist es vorteilhaft, wenn am Boden des Basiselementes eine Öffnung ausgebildet ist, durch die ein Energieversorgungskabel in den Aufnahmeraum zu einer Elektronikeinheit oder einer Ladebuchse ragt. So wird eine gute Zugänglichkeit des Energieanschlusses im Aufnahmerum erreicht.

Des Weiteren ist vorzugsweise am Boden des Basiselementes eine Ablauföffnung ausgebildet, durch die Wasser aus dem Aufnahmeraum abführbar ist. Diese Öffnung kann gleichzeitig als Öffnung für das Energieversorgungskabel dienen. In den Aufnahmeraum eindringendes Wasser aber auch durch Kondensation an einer Ladeeinheit entstehendes Kondensat kann sich entsprechend nicht im Aufnahmeraum sammeln, sondern wird zuverlässig abgeführt.

Das Verstärkungselement ist vorzugsweise aus Metall oder einem faserverstärkten Kunststoff hergestellt. Dabei kann es sich um ein Blech oder Stahlplatten, mit Profilierungen oder L-Formen handeln, die auch aus einem andere Metall hergestellt sein können. Diese sind besonders geeignet, die an der Rückseite der Frontwand entstehenden Zugkräfte zuverlässig aufzunehmen und abzuführen.

Es wird somit eine Bordstein- oder Randstein-Ladevorrichtung zum Laden eines Energiespeichers eines elektrisch angetriebenen Fahrzeugs geschaffen, welches eine hohe Festigkeit und Haltbarkeit bei reduzierten Kosten aufweist, wodurch Schäden an den Bordsteinen und Randsteinen vermieden werden und gleichzeitig die Elektronik geschützt wird. Des Weiteren sind die erfindungsgemäßen Bordstein- oder Randstein-Ladevorrichtungen flexibel und modular aufgebaut und dennoch sehr einfach zu montieren. Die notwendigen Erdarbeiten für die Montage werden ebenso minimiert wie die Anzahl der Montageschritte zur Realisierung eines Systems, das beispielweise zum Aufbau einer Smart City mit Netzwerken, Aufladestationen, Zähl- und Messsystemen genutzt werden kann. Dabei wird das Stadtbild nicht verändert. Ein Platzverlust wird ebenso vermieden wie Stolperfallen durch Kabel auf den Gehwegen.

Drei nicht beschränkende Ausführungsbeispiele erfindungsgemäßer Bordstein- oder Randstein-Ladevorrichtungen zum Laden eines Energiespeichers eines elektrisch angetriebenen Fahrzeugs werden nachfolgend am Beispiel von Bordstein-Ladevorrichtungen beschrieben.

Die Figur 1 zeigt eine Prinzipskizze einer Straße mit einer begrenzenden Bordstein- oder Randstein-Ladevorrichtung in Draufsicht.

Die Figur 2 zeigt eine perspektivische Ansicht einer ersten Ausführungsform eines Basiselementes mit Verstärkungselement einer erfindungsgemäßen Bordstein- oder Randstein-Ladevorrichtung.

Die Figur 3 zeigt eine perspektivische Ansicht einer zweiten Ausführungsform eines Basiselementes mit Verstärkungselement einer erfindungsgemäßen Bordstein- oder Randstein-Ladevorrichtung ohne Elektronik.

Die Figur 4 zeigt einen Längsschnitt durch eine erfindungsgemäße Bordstein- oder Randstein-Ladevorrichtung mit dem Basiselement und dem Verstärkungselement gemäß der Figur 3 in perspektivischer Darstellung.

Die Figur 5 zeigt eine perspektivische Ansicht einer dritten Ausführungsform eines Basiselementes mit Verstärkungselement einer erfindungsgemäßen Bordstein- oder Randstein-Ladevorrichtung.

Die Figur 6 zeigt einen Querschnitt der erfindungsgemäßen Bordstein-Ladevorrichtungen im Bereich der Deckelverschraubung.

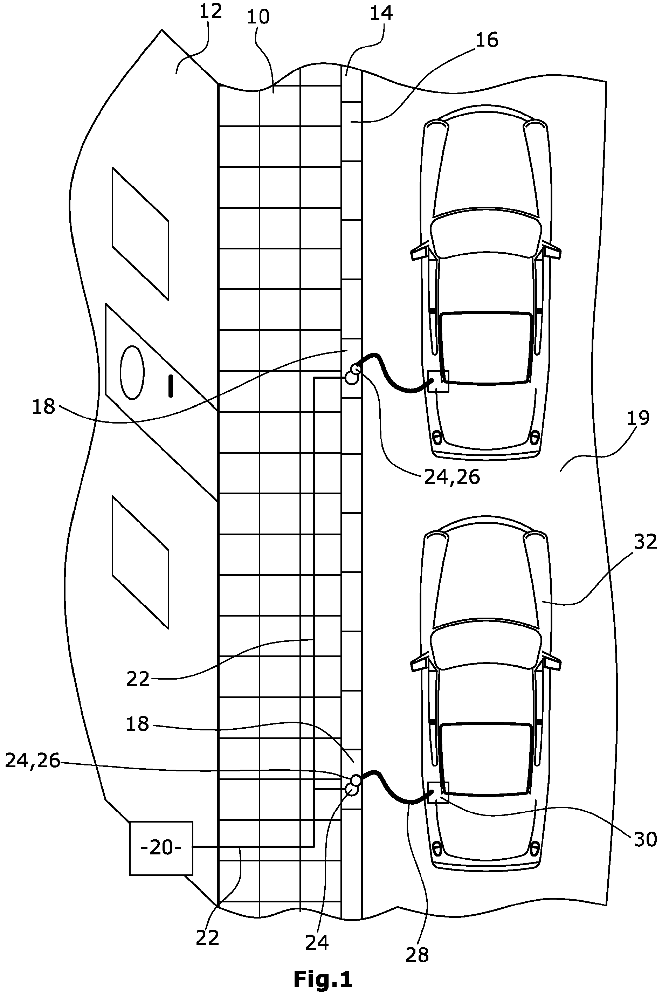

In Figur 1 ist ein Gehweg 10 dargestellt, der an seiner einen Seite durch eine Hauswand 12 und an der anderen Seite durch einen Bordsteinrand 14 begrenzt ist, der durch mehrere Steinelemente 16 und erfindungsgemäße Bordstein-Ladevorrichtungen 18 gebildet wird und eine Begrenzung zu einem Fahrweg 19 in Form einer Straße ausbildet. An der vom Fahrweg 19 abgewandten Seite des Gehweges 10 befindet sich eine Energiequelle 20 in Form eines mit dem Stromnetz verbundenen Stromanschlusses. Die Energiequelle 20 ist über unterirdische Energieversorgungskabel 22 mit den Bordstein- oder Randstein-Ladevorrichtungen 18 verbunden. An den Bordstein- oder Randstein-Ladevorrichtungen 18 sind Ladebuchsen 24 angeordnet, in die Stecker 26 gesteckt sind, welche über Kabel 28 jeweils mit einem Energiespeicher 30, insbesondere einer Batterie eines elektrisch betriebenen Fahrzeugs 32 verbunden ist, so dass dieser Energiespeicher 30 über die Energiequelle 20 aufgeladen werden kann.

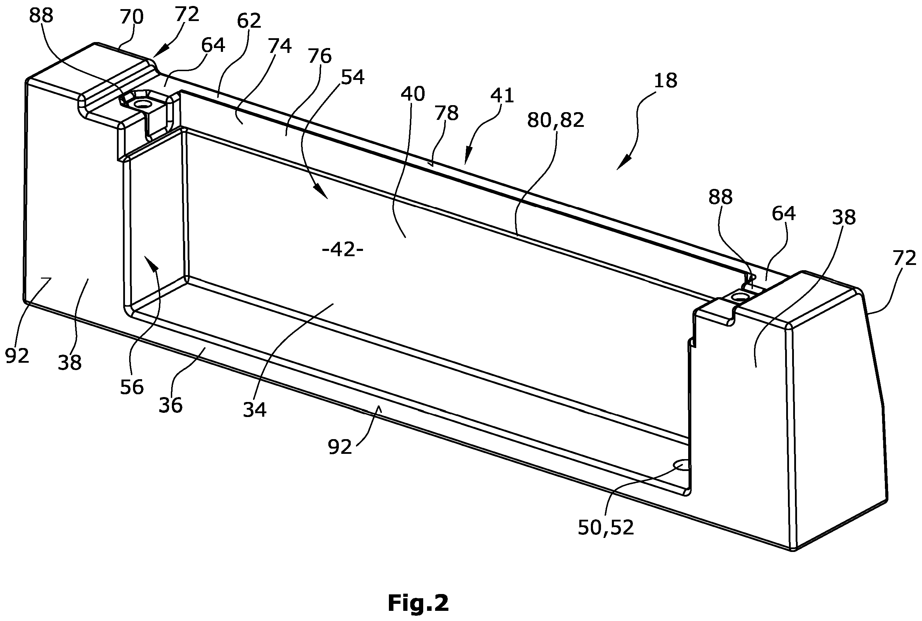

Erfindungsgemäße Bordstein- oder Randstein-Ladevorrichtungen 18 sind in den Figuren 2 bis 5 dargestellt. Im Folgenden ist mit den Begriffen "oben", "unten", "unterhalb", "oberhalb" oder ähnlichen jeweils der Zustand der Bordstein- oder Randstein-Ladevorrichtungen 18 gemeint, der dem am Straßenrand eingebauten Zustand entspricht. Eine "Oberseite" entspricht somit der im eingebauten Zustand von der Erdoberfläche abgewandten Seite, eine "Front" der zur Straße gewandten Seite des Bordsteins.

Die Bordstein- oder Randstein-Ladevorrichtung 18 gemäß Figur 2 besteht aus einem Basiselement 34, welches aus einem Beton oder einem Kunststoff hergestellt ist und Faserverstärkungen enthalten kann. Dieses Basiselement 34 weist einen Boden 36 auf, von dem aus sich nach oben insgesamt zwei Seitenwände 38 und eine Frontwand 40 erstrecken. Die Seitenwände 38 befinden sich in Längserstreckungsrichtung betrachtet an den beiden Enden der Bordstein- oder Randstein-Ladevorrichtung 18, so dass benachbarte Bordstein- oder Randstein-Ladevorrichtungen 18 mit diesen Seitenwänden 38 aneinander anliegen. Die Frontwand 40 begrenzt die Bordstein- oder Randstein-Ladevorrichtung 18 zur Straße hin.

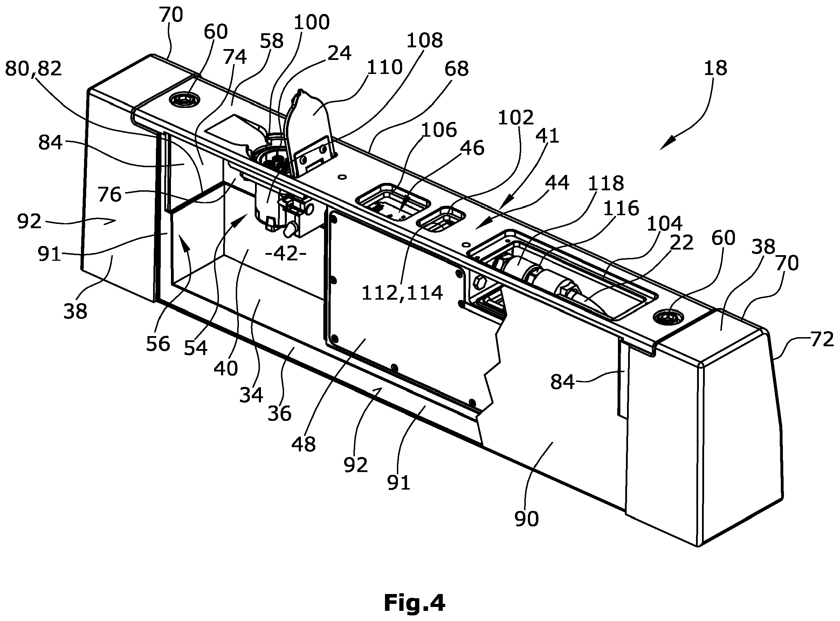

Hinter dieser Frontwand 40, deren äußere Wandfläche 41 den Fahrweg 19 seitlich begrenzt, und zwischen den beiden Seitenwänden 38 ist ein Aufnahmeraum 42 am Basiselement 34 ausgebildet, in welchem, wie in Figur 4 dargestellt ist, eine Ladeeinheit 44 angeordnet ist, deren Elektronikeinheit 46 in einer gekapselten Elektronikbox 48 angeordnet ist, welche über das Energieversorgungskabel 22 mit Strom versorgt wird und die einen Stromausgang aufweist, über den eine Verbindung zur Ladebuchse 24 hergestellt wird. Das Energieversorgungskabel 22 ragt durch eine Öffnung 50 im Boden 36 des Basiselementes 34 in den Aufnahmeraum 42, die gleichzeitig als Ablauföffnung 52 zur Abführung von im Aufnahmeraum 42 sich ansammelnden Wassers dient.

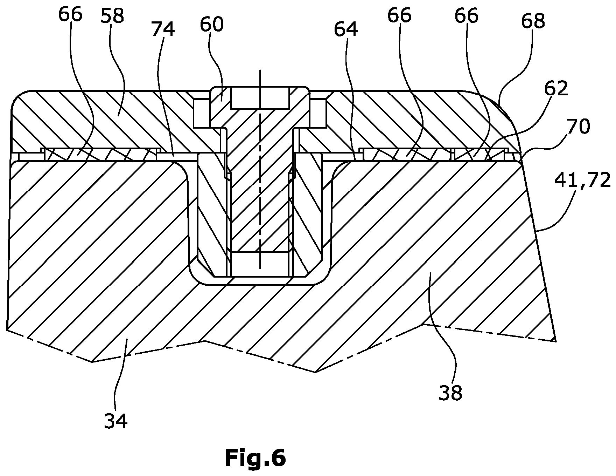

Der Aufnahmeraum 42 wird durch eine innere Wandfläche 54 der Frontwand 40, den Boden 36 sowie Innenwandflächen 56 der Seitenwände 38 nach unten und zu den Seiten begrenzt. Ein Deckel 58, der insbesondere aus Stahl ist, ist am Basiselement 34 über Schrauben 60 befestigt und verschließt eine nach oben weisende offene Seite des Aufnahmeraums 42. Dabei liegt der Deckel 58 auf einer Oberseite 62 der Frontwand 40 des Basiselementes 34 auf und erstreckt sich auch in Längserstreckungsrichtung betrachtet über die Enden des Aufnahmeraums 42 hinaus, so dass er seitlich auch auf einem zum Aufnahmeraum 42 gerichteten Abschnitt von Oberseiten 64 der Seitenwände 38 aufliegt. Zwischen den Oberseiten 62, 64 der Seitenwände 38 und der Frontwand 40 sowie dem Deckel 58 ist, wie in Figur 6 zu erkennen ist, eine Elastomerschicht 66 und/oder eine Dichtung angeordnet, über die Stöße am Deckel 58 und daraus resultierende Biegungen des Deckels 58 gedämpft und gleichmäßig in das Basiselement 34 eingeleitet werden sowie ein Eindringen von Wasser und Schmutz verhindert werden kann.

Der Deckel 58 weist eine abgerundete Aufprallwand 68 auf, welche eine Kante zwischen der Oberseite 62 der Frontwand 40 und der zum Fahrweg 19 weisenden äußeren Wandfläche 41 der Frontwand 40 der Seitenwand 40 abdeckt. Diese abgerundete Aufprallwand 68 verlängert eine Aufprallkante 70 zwischen den Oberseiten 64 der Seitenwände 38 und deren zur Straße weisenden Frontflächen 72.

Die Befestigung des Deckels 58 erfolgt mittels der zwei Schrauben 60, die in Längserstreckungsrichtung betrachtet an den Enden des Deckels 58 durch entsprechende Bohrungen ragen. Die Schrauben 60 werden in ein Innengewinde eines Einlegers geschraubt, welches im Ausführungsbeispiel gemäß der Figur 2 in das Basiselement 34 im zum Aufnahmeraum 42 gelegenen Abschnitt der Seitenwände 38 eingegossen sind.

Erfindungsgemäß ist bei der Ausführung gemäß Figur 2 an der zum Aufnahmeraum 42 weisenden inneren Wandfläche 54 der Frontwand 40 ein Verstärkungselement 74 befestigt. Dieses besteht im Ausführungsbeispiel gemäß Figur 2 lediglich aus einer Verstärkungsplatte 76, die insbesondere aus Metall ist, und erstreckt sich vertikal von knapp oberhalb einer Oberseite 78 der inneren Wandfläche 54 der Frontwand 40 mindestens 20 mm in Richtung zum Boden 36 und bis zu einem Absatz 80 an der inneren Wandfläche 54, der eine Anlagefläche 82 bildet, gegen die die Verstärkungsplatte 76 anliegt sowie horizontal über die gesamte Länge des Aufnahmeraums 42.

Die Verstärkungsplatte 76 ist über eine Klebeschicht, die beispielsweise aus einem Epoxidharz bestehen kann, möglichst vollflächig auf der inneren Wandfläche 54 der Frontwand 40 des Basiselementes 34 eingeklebt.

Wird nun die Bordstein-Ladevorrichtung 18 beispielsweise durch den Reifen eines Lkw seitlich belastet, wirkt eine Kraft auf die Frontwand 40, insbesondere in Richtung des Aufnahmeraums 42. Während die dabei an der äußeren Wandfläche 41 der Frontwand 40 angreifenden Druckkräfte sehr gut vom Basiselement 34 aufgenommen werden können, entstehen an der inneren Wandfläche 54 Zugkräfte, gegen die der Beton der Frontwand 40 deutlich empfindlicher ist. Diese Kräfte werden nunmehr jedoch durch die Verstärkungsplatte 76 aufgenommen beziehungsweise zu den Seitenwänden 38 und dem Boden 36 des Basiselementes 34 abgeleitet, so dass eine ausreichende Gesamtfestigkeit erreicht wird.

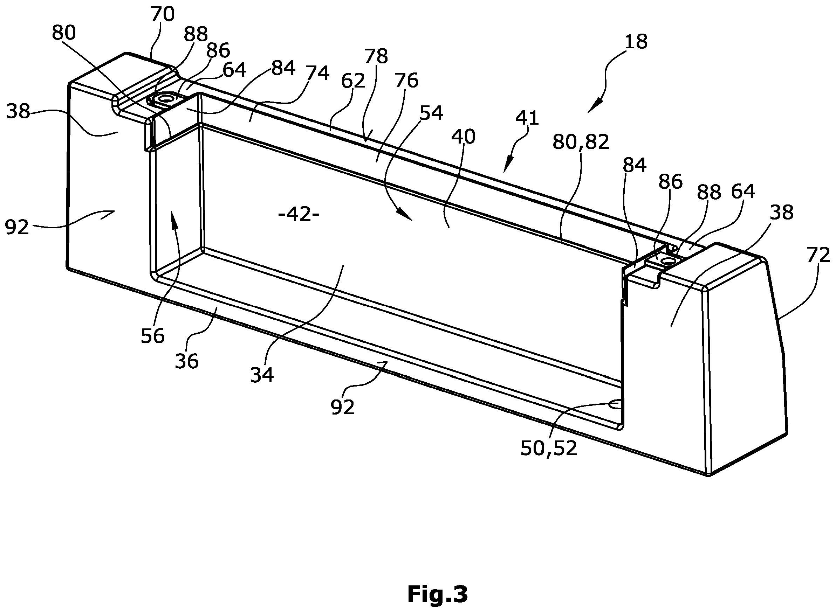

Die Ausführung gemäß der Figuren 3 und 4 unterscheidet sich von der Ausführung gemäß der Figur 2 dadurch, dass das Verstärkungselement 74 zusätzlich zu der Verstärkungsplatte 76 zwei Seitenplatten 84 aufweist, die sich entlang der Innenwandflächen 56 der Seitenwände 38 auf der gleichen Höhe wie die Verstärkungsplatte erstrecken. Auch diese Seitenplatten 84 sind an den Innenwandflächen 56, insbesondere durch vollflächiges Kleben befestigt und liegen gegen entsprechende Absätze 80 an den Innenwandflächen 56 der Seitenwände 38 an.

Von diesen Seitenplatten 84 ragen flanschförmige Erweiterungen 86 in Richtung der Seitenwände 38 und greifen dort in entsprechend geformte Ausnehmungen 88, die an der Oberseite 64 der Seitenwände 38 im Bereich des durch den Deckel 58 abgedeckten Abschnitts der Seitenwände 38 ausgebildet sind. In diesen flanschförmigen Erweiterungen 86 sind Innengewinde ausgebildet, so dass die Schrauben 60 zur Befestigung des Deckels 58 in diese Innengewinde gedreht werden können und somit auf den Einleger verzichtet werden kann.

Diese Ausführung des Verstärkungselementes 74 erhöht noch einmal die Festigkeit der Bordstein-Ladevorrichtung 18, da die auf die Frontwand 40 der Bordstein-Ladevorrichtung 18 wirkenden Kräfte nicht nur über die Verstärkungsplatte 76 abgefangen werden, sondern zusätzlich in den Bereich der Seitenwände 38 abgeleitet werden. Auch Biegekräfte des Deckels 58 können durch die vorhandenen Absätze 80 gut aufgenommen werden, so dass zu große Scherkräfte an den Klebeflächen vermieden werden.

Sowohl bei der Ausführung gemäß der Figur 2 als auch bei der Ausführung gemäß der Figuren 3 und 4 wird die Rückseite des Aufnahmeraums 42 durch eine Rückwand 90 verschlossen, die in der Figur 4 mit einem Aufbruch dargestellt ist und durch die ein Eindringen von hinter der Bordstein-Ladevorrichtung liegenden Erdreich in den Aufnahmeraum 42 verhindert wird. Bei der Ausbildung gemäß der Figur 4 kann diese Rückwand 90 auch einteilig mit dem Verstärkungselement 74 ausgebildet werden. Auf dieser Rückwand 90, die ebenfalls vorzugsweise aus einer Metallplatte besteht, liegt der Deckel 58 ebenfalls auf. Die Befestigung der Rückwand 90 kann mittels Kleben erfolgen, wobei die Rückwand 90 dann an Ausschnitten 91 an den Aufnahmeraum 42 angrenzenden rückwärtigen Oberflächen 92 der Seitenwände 38 und des Bodens 36 festgeklebt wird.

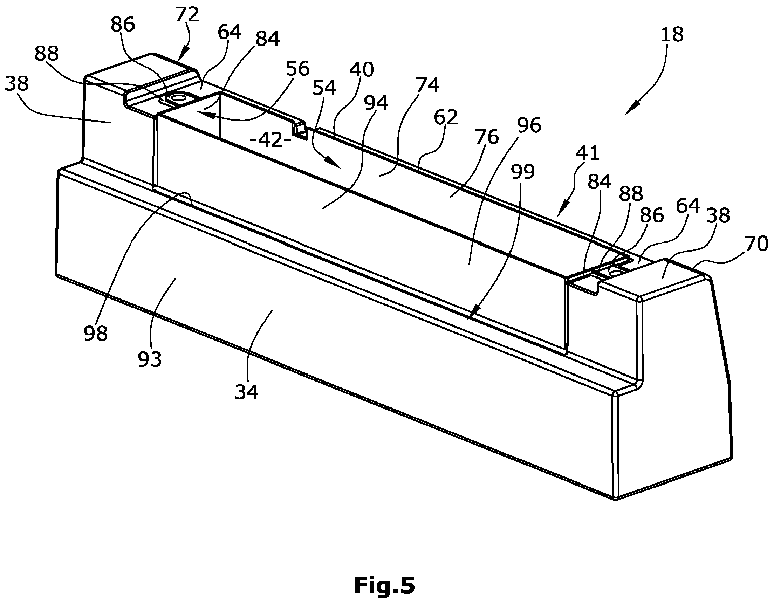

Eine weitere alternative Ausführung des Verstärkungselementes 74 und des Basiselementes 34 ist in der Figur 5 dargestellt. Bei dieser Ausführung ist am Basiselement 34 ein Rückwandabschnitt 93 ausgebildet, der sich über etwa die halbe Höhe vom Boden 36 in Richtung zum Deckel 58 erstreckt und das Basiselement 34 in Richtung zum Gehweg erweitert, so dass dieses Basiselement 34 eine größere Tiefe aufweist als die den Aufnahmeraum 42 begrenzenden Innenwandflächen 56 der Seitenwände 38. Dieser Rückwandabschnitt 93 befindet sich im eingebauten Zustand der Bordstein-Ladevorrichtung 18 unterhalb der Pflastersteine des Gehwegs 10.

Das Verstärkungselement 74 weist neben der Verstärkungsplatte 76 und den beiden Seitenplatten 84 zusätzlich eine Rückwandplatte 94 auf, die parallel zu der Verstärkungsplatte 76 verläuft und sich von den Enden der Seitenplatten 84 aus zwischen diesen erstreckt und so mit den Seitenplatten 84 und der Verstärkungsplatte 76 einen geschlossenen Verstärkungsring 96 bildet. Diese Rückwandplatte 94 erstreckt sich bis an eine Innenwandfläche 98 des Rückwandabschnitts 93 und ist an dieser über einen Anlageabschnitt 99, mit der die Rückwandplatte 94 gegen den Rückwandabschnitt 93 des Basiselementes 34 anliegt insbesondere durch Kleben befestigt, so dass die Rückseite des Aufnahmeraums 42 durch den Rückwandabschnitt 93 des Basiselementes 34 und die Rückwandplatte 94 des Verstärkungselementes 74 geschlossen wird.

Diese Ausführung führt zu einer zusätzlichen Festigkeit der Bordstein-Ladevorrichtung, da die auftretenden Kräfte sowohl durch die Verstärkungsplatte 76 als auch durch die Seitenplatten 84 und zusätzlich durch die Rückwandplatte 94 auf das Basiselement 34 verteilt werden. Zusätzlich können auch Kräfte über die flanschartigen Erweiterungen 86, die ebenfalls durch Kleben mit den Seitenwänden 38 verbunden werden können, aufgenommen werden.

Es sei noch erwähnt, wie in Figur 4 zu erkennen ist, dass der Deckel 58 insgesamt vier Öffnungen 100, 102, 104, 106 aufweist. Unter der ersten Öffnung 100 befindet sich die Ladebuchse 24, die in einem Steckeraufnahmebereich 108 des Aufnahmeraums 42 angeordnet ist. Diese Ladebuchse 24 ist, wie in den Figuren 2 und 3 dargestellt ist, durch einen Buchsendeckel 110 verschlossen.

Die Ladebuchse 24 ist ebenso wie ein Energiezähler 112, dessen Anzeigeeinheit 114 unterhalb der zweiten Öffnung 102 angeordnet ist, um dem Nutzer zu ermöglichen, die geladene Strommenge abzulesen, Teil der Ladeeinheit 44, die im Aufnahmeraum 42 angeordnet ist. Das über die Öffnung 50 in den Aufnahmeraum 42 ragende Energieversorgungskabel 22 wird in einem elektrischen Anschlussbereich 116 der Elektronikbox 48 mit einem Kontaktanschluss 118 verbunden. Der elektrische Anschlussbereich 116 ist unterhalb der dritten Öffnung 104 angeordnet, welche über einen nicht dargestellten Wartungsdeckel verschlossen wird. Die vierte Öffnung 106 wird durch einen Glas- oder Kunststoffdeckel verschlossen, unter dem eine Sende- und Empfangseinheit angeordnet wird.

Zur Ladeeinheit können neben dem bereits genannten Energiezähler 112, eine Ladesteuerung, ein Schütz, insbesondere ein Hochvoltschütz, ein Fehlerstromschutzschalter und/oder Leitungsschutzschalter, ein Netzteil, das mit der Ladesteuerung verbunden ist, ein Fehlerstromsensor und weitere elektronische Bauteile gehören.

Eine derartig aufgebaute Bordstein- oder Randstein-Ladevorrichtung verändert das Straßenbild fast nicht und ist auch in engen Städten beinahe ohne zusätzlichen Platzbedarf unterzubringen. Die Haltbarkeit ist trotz der geringen Baugröße sehr hoch, da Kräfte durch einen Aufprall von Fahrzeugrädern über die Aufprallkante beziehungsweise und den Deckel aus Stahl aufgenommen werden und gleichmäßig über das Verstärkungselement und das Basiselement abgeleitet werden können. Insbesondere können auch die Zugkräfte, gegen die das Basiselement empfindlich ist, zuverlässig aufgenommen werden. So entstehen eine sehr gute Haltbarkeit und Festigkeit bei gleichzeitig geringen Kosten, da das Verstärkungselement auf das Notwendige reduziert ist.

Es sollte deutlich sein, dass die Elektronik an die jeweiligen Gegebenheiten, insbesondere auch den gesetzlichen Gegebenheiten der Länder angepasst werden kann. Die Ladebuchse kann mit sehr unterschiedlichen Hub-, Klapp- oder Schwenkmechanismen ausgestattet werden. Auch kann die Befestigung des Deckels unterschiedlich erfolgen. Die Form des Basiselementes kann ebenfalls von den dargestellten Ausführungen abweichen. Insbesondere ist das Verstärkungselement bezüglich seiner Höhe anzupassen. Die Merkmale der dargestellten Ausführungen können auch auf unterschiedliche Weise miteinander kombiniert werden. Die Befestigung des Verstärkungselementes kann ebenfalls beispielsweise durch Schrauben oder im Beton verankerte Streben erfolgen.

## Patentansprüche

1. Bordstein- oder Randstein-Ladevorrichtung (18) zum Laden eines Energiespeichers (30) eines elektrisch angetriebenen Fahrzeugs (32) mit
einem Basiselement (34), welches aus einem oder mehreren der Materialien Beton, Naturstein, Kunststoff und Verbundwerkstoff hergestellt ist und einen Aufnahmeraum (42) aufweist,
einem Verstärkungselement (74), das am Basiselement (34) befestigt ist und den Aufnahmeraum (42) an zumindest einer Seite zumindest teilweise begrenzt,
und einer Ladeeinheit (44), die im Aufnahmeraum (42) angeordnet ist,
**dadurch gekennzeichnet, dass**
das Basiselement (34) zumindest einen Boden (36), zwei das Basiselement (34) in Längserstreckungsrichtung begrenzende Seitenwände (38) und eine sich in Längserstreckungsrichtung erstreckende Frontwand (40) aufweist, deren äußere Wandfläche (41) im eingebauten Zustand einen Fahrweg (19) begrenzt,
und deren innere Wandfläche (54) zum Aufnahmeraum (42) weist, wobei das Verstärkungselement (74) zumindest eine Verstärkungsplatte (76) aufweist, welche gegen die innere Wandfläche (54) der Frontwand (40) anliegt und an der Frontwand (40) befestigt ist.

2. Bordstein- oder Randstein-Ladevorrichtung (18) zum Laden eines Energiespeichers (30) eines elektrisch angetriebenen Fahrzeugs (32) nach Anspruch 1,
**dadurch gekennzeichnet, dass**
ein Deckel (58) aus Metall oder einem faserverstärkten Kunststoff oder anderem Verbundmaterial eine offene Seite des Aufnahmeraums (42) und einen an die offene Seite des Aufnahmeraums (42) angrenzenden Bereich einer Oberseite (64) der Seitenwände (38) des Basiselementes (34) und eine Oberseite (62) der den Aufnahmeraum (42) begrenzenden Frontwand (40) abdeckt.

3. Bordstein- oder Randstein-Ladevorrichtung (18) zum Laden eines Energiespeichers (30) eines elektrisch angetriebenen Fahrzeugs (32) nach Anspruch 1 oder 2,
**dadurch gekennzeichnet, dass**
sich das Verstärkungselement (74) zumindest von einer Oberseite (78) der inneren Wandfläche (54) der Frontwand (40) mindestens 20 mm in Richtung des Bodens (36) entlang der inneren Wandfläche (54) erstreckt.

4. Bordstein- oder Randstein-Ladevorrichtung (18) zum Laden eines Energiespeichers (30) eines elektrisch angetriebenen Fahrzeugs (32) nach einem der vorhergehenden Ansprüche 2 oder 3,
**dadurch gekennzeichnet, dass**
das Verstärkungselement (74) gegen einen Absatz (80), der an der inneren Wandfläche (54) der Frontwand (40) ausgebildet ist, und eine zum Deckel (58) weisende Anlagefläche (82) bildet, anliegt.

5. Bordstein- oder Randstein-Ladevorrichtung (18) zum Laden eines Energiespeichers (30) eines elektrisch angetriebenen Fahrzeugs (32) nach Anspruch 3,
**dadurch gekennzeichnet, dass**
sich das Verstärkungselement (74) zumindest von der Oberseite (78) der inneren Wandfläche (54) der Frontwand (40) bis zum Boden (36) entlang der inneren Wandfläche (54) erstreckt.

6. Bordstein- oder Randstein-Ladevorrichtung (18) zum Laden eines Energiespeichers (30) eines elektrisch angetriebenen Fahrzeugs (32) nach einem der vorhergehenden Ansprüche,
**dadurch gekennzeichnet, dass**
das Verstärkungselement (74) die Verstärkungsplatte (76) und zwei sich von den Enden der Verstärkungsplatte (76) erstreckende Seitenplatten (84) aufweist, die sich entlang einer Innenwandfläche (56) der Seitenwände (38) erstrecken.

7. Bordstein- oder Randstein-Ladevorrichtung (18) zum Laden eines Energiespeichers (30) eines elektrisch angetriebenen Fahrzeugs (32) nach einem der vorhergehenden Ansprüche,
**dadurch gekennzeichnet, dass**
die Befestigung des Verstärkungselementes (74) im Basiselement (34) durch Kleben oder Schrauben erfolgt.

8. Bordstein- oder Randstein-Ladevorrichtung (18) zum Laden eines Energiespeichers (30) eines elektrisch angetriebenen Fahrzeugs (32) nach einem der Ansprüche 1 bis 6,
**dadurch gekennzeichnet, dass**
die Befestigung des Verstärkungselementes (74) durch Streben am Verstärkungselement (74) erfolgt, die in das Basiselement (34) ragen.

9. Bordstein- oder Randstein-Ladevorrichtung (18) zum Laden eines Energiespeichers (30) eines elektrisch angetriebenen Fahrzeugs (32) nach einem der vorhergehenden Ansprüche,
**dadurch gekennzeichnet, dass**
der Aufnahmeraum (42) durch eine Rückwand (90) aus Metall begrenzt ist, die an Ausschnitten (91) an rückwärtigen Oberflächen (92) der Seitenwände (38) und des Bodens (36) befestigt ist.

10. Bordstein- oder Randstein-Ladevorrichtung (18) zum Laden eines Energiespeichers (30) eines elektrisch angetriebenen Fahrzeugs (32) nach einem der Ansprüche 2 bis 9,
**dadurch gekennzeichnet, dass**
das Basiselement (34) einen Rückwandabschnitt (93) aufweist, welcher sich vom Boden (36) des Basiselementes (34) über ein Drittel bis drei Viertel der Höhe des Basiselementes (34) nach oben in Richtung des Deckels (58) erstreckt.

11. Bordstein- oder Randstein-Ladevorrichtung (18) zum Laden eines Energiespeichers (30) eines elektrisch angetriebenen Fahrzeugs (32) nach einem der Ansprüche 2 bis 10,
**dadurch gekennzeichnet, dass**
der Deckel (58) eine im eingebauten Zustand zwischen der Oberseite (62) und der äußeren Wandfläche (41) der Frontwand (40) ausgebildete Kante zumindest entlang der Längserstreckung des Aufnahmeraums (42) vollständig abdeckt.

12. Bordstein- oder Randstein-Ladevorrichtung (18) zum Laden eines Energiespeichers (30) eines elektrisch angetriebenen Fahrzeugs (32) nach einem der Ansprüche 2 bis 11,
**dadurch gekennzeichnet, dass**
der Deckel (58) unter Zwischenlage einer Dichtung oder einer Elastomerschicht (66) gegen die Frontwand (40), die Seitenwände (38) und/oder das Verstärkungselement (74) anliegt.

13. Bordstein- oder Randstein-Ladevorrichtung (18) zum Laden eines Energiespeichers (30) eines elektrisch angetriebenen Fahrzeugs (32) nach einem der vorhergehenden Ansprüche,
**dadurch gekennzeichnet, dass**
am Boden (36) des Basiselementes (34) eine Öffnung (50) ausgebildet ist, durch die ein Energieversorgungskabel (22) in den Aufnahmeraum (42) zu einer Elektronikeinheit (46) oder einer Ladebuchse (24) ragt.

14. Bordstein- oder Randstein-Ladevorrichtung (18) zum Laden eines Energiespeichers (30) eines elektrisch angetriebenen Fahrzeugs (32) nach einem der vorhergehenden Ansprüche,
**dadurch gekennzeichnet, dass**
am Boden (46) des Basiselementes (34) eine Ablauföffnung (52) ausgebildet ist, durch die Wasser aus dem Aufnahmeraum (42) abführbar ist.

15. Bordstein- oder Randstein-Ladevorrichtung (18) zum Laden eines Energiespeichers (30) eines elektrisch angetriebenen Fahrzeugs (32) nach einem der vorhergehenden Ansprüche,
**dadurch gekennzeichnet, dass**
das Verstärkungselement (74) aus Metall oder einem faserverstärkten Kunststoff ist.

## Claims

1. Curb or curbstone charging device (18) for charging an energy store (30) of an electrically driven vehicle (32), comprising
a base element (34) which is produced from one or more of the materials concrete, natural stone, plastic and composite material and comprises a receiving space (42),
a reinforcing element (74) which is fastened to the base element (34) and at least partially delimits the receiving space (42) on at least one side,
and a charging unit (44) which is arranged in the receiving space (42),
**characterized in that**
the base element (34) comprises at least one bottom (36), two side walls (38) delimiting the base element (34) in the direction of longitudinal extent and a front wall (40) extending in the direction of longitudinal extent, the outer wall surface (41) of which, in the installed state, delimits a travel path (19), and the inner wall surface (54) of which faces the receiving space (42), wherein the reinforcing element (74) comprises at least one reinforcing plate (76) which bears against the inner wall surface (54) of the front wall (40) and is fastened to the front wall (40).

2. Curb or curbstone charging device (18) for charging an energy store (30) of an electrically driven vehicle (32) according to Claim 1,
**characterized in that**
a cover (58) made of metal or a fibre-reinforced plastic or other composite material covers an open side of the receiving space (42) and a region, adjoining the open side of the receiving space (42), of an upper side (64) of the side walls (38) of the base element (34) and an upper side (62) of the front wall (40) delimiting the receiving space (42).

3. Curb or curbstone charging device (18) for charging an energy store (30) of an electrically driven vehicle (32) according to Claim 1 or 2,
**characterized in that**
the reinforcing element (74) extends at least from an upper side (78) of the inner wall surface (54) of the front wall (40) at least 20 mm in the direction of the bottom (36) along the inner wall surface (54).

4. Curb or curbstone charging device (18) for charging an energy store (30) of an electrically driven vehicle (32) according to either of the preceding Claims 2 and 3,
**characterized in that**
the reinforcing element (74) bears against a shoulder (80) which is formed on the inner wall surface (54) of the front wall (40) and forms a bearing surface (82) facing the cover (58).

5. Curb or curbstone charging device (18) for charging an energy store (30) of an electrically driven vehicle (32) according to Claim 3,
**characterized in that**
the reinforcing element (74) extends at least from the upper side (78) of the inner wall surface (54) of the front wall (40) as far as the bottom (36) along the inner wall surface (54).

6. Curb or curbstone charging device (18) for charging an energy store (30) of an electrically driven vehicle (32) according to one of the preceding claims,
**characterized in that**
the reinforcing element (74) comprises the reinforcing plate (76) and two side plates (84) which extend from the ends of the reinforcing plate (76) and which extend along an inner wall surface (56) of the side walls (38).

7. Curb or curbstone charging device (18) for charging an energy store (30) of an electrically driven vehicle (32) according to one of the preceding claims,
**characterized in that**
the reinforcing element (74) is fastened in the base element (34) by adhesive bonding or screwing.

8. Curb or curbstone charging device (18) for charging an energy store (30) of an electrically driven vehicle (32) according to one of Claims 1 to 6,
**characterized in that**
the reinforcing element (74) is fastened by struts on the reinforcing element (74) which project into the base element (34).

9. Curb or curbstone charging device (18) for charging an energy store (30) of an electrically driven vehicle (32) according to one of the preceding claims,
**characterized in that**
the receiving space (42) is delimited by a rear wall (90) made of metal which is fastened to cutouts (91) on rear surfaces (92) of the side walls (38) and of the bottom (36).

10. Curb or curbstone charging device (18) for charging an energy store (30) of an electrically driven vehicle (32) according to one of Claims 2 to 9,
**characterized in that**
the base element (34) comprises a rear wall section (93) which extends upwards from the bottom (36) of the base element (34) over one third to three quarters of the height of the base element (34) in the direction of the cover (58).

11. Curb or curbstone charging device (18) for charging an energy store (30) of an electrically driven vehicle (32) according to one of Claims 2 to 10,
**characterized in that**
the cover (58) completely covers an edge, formed in the installed state between the upper side (62) and the outer wall surface (41) of the front wall (40), at least along the longitudinal extent of the receiving space (42).

12. Curb or curbstone charging device (18) for charging an energy store (30) of an electrically driven vehicle (32) according to one of Claims 2 to 11,
**characterized in that**
the cover (58) bears against the front wall (40), the side walls (38) and/or the reinforcing element (74) with the interposition of a seal or an elastomer layer (66).

13. Curb or curbstone charging device (18) for charging an energy store (30) of an electrically driven vehicle (32) according to one of the preceding claims,
**characterized in that**
an opening (50) is formed on the bottom (36) of the base element (34), through which opening an energy supply cable (22) projects into the receiving space (42) to an electronics unit (46) or a charging socket (24).

14. Curb or curbstone charging device (18) for charging an energy store (30) of an electrically driven vehicle (32) according to one of the preceding claims,
**characterized in that**
an outflow opening (52) is formed on the bottom (46) of the base element (34), through which outflow opening water can be discharged from the receiving space (42).

15. Curb or curbstone charging device (18) for charging an energy store (30) of an electrically driven vehicle (32) according to one of the preceding claims,
**characterized in that**
the reinforcing element (74) is made of metal or a fibre-reinforced plastic.

## Revendications

1. Dispositif de charge de bordure ou de bord de trottoir (18) pour charger un accumulateur d'énergie (30) d'un véhicule à propulsion électrique (32), avec un élément de base (34), qui est fabriqué à partir d'un ou de plusieurs des matériaux béton, pierre naturelle, matière plastique et matériau composite et présente un espace de réception (42),
un élément de renfort (74), qui est fixé sur l'élément de base (34) et délimite au moins en partie l'espace de réception (42) sur au moins un côté,
et une unité de charge (44), qui est disposée dans l'espace de réception (42),
**caractérisé en ce que**
l'élément de base (34) présente au moins un fond (36), deux parois latérales (38) délimitant l'élément de base (34) dans le sens d'extension longitudinale, et une paroi avant (40) s'étendant dans le sens d'extension longitudinale, dont la surface de paroi extérieure (41) délimite une course (19) dans l'état monté,
et dont la surface de paroi intérieure (54) pointe vers l'espace de réception (42), dans lequel l'élément de renfort (74) présente au moins une plaque de renfort (76) qui repose contre la surface de paroi intérieure (54) de la paroi avant (40) et est fixée sur la paroi avant (40).

2. Dispositif de charge de bordure ou de bord de trottoir (18) pour charger un accumulateur d'énergie (30) d'un véhicule à propulsion électrique (32) selon la revendication 1,
**caractérisé en ce que**
un couvercle (58) en métal ou en une matière plastique renforcée par des fibres ou en un autre matériau composite couvre un côté ouvert de l'espace de réception (42) et une zone, jouxtant le côté ouvert de l'espace de réception (42), d'un côté supérieur (64) des parois latérales (38) de l'élément de base (34) et un côté supérieur (62) de la paroi avant (40) délimitant l'espace de réception (42).

3. Dispositif de charge de bordure ou de bord de trottoir (18) pour charger un accumulateur d'énergie (30) d'un véhicule à propulsion électrique (32) selon la revendication 1 ou 2,
**caractérisé en ce que**
l'élément de renfort (74) s'étend au moins depuis un côté supérieur (78) de la surface de paroi intérieure (54) de la paroi avant (40) d'au moins 20 mm en direction du fond (36) le long de la surface de paroi intérieure (54).

4. Dispositif de charge de bordure ou de bord de trottoir (18) pour charger un accumulateur d'énergie (30) d'un véhicule à propulsion électrique (32) selon l'une des revendications précédentes 2 ou 3,
**caractérisé en ce que**
l'élément de renfort (74) repose contre un talon (80), qui est réalisé sur la surface de paroi intérieure (54) de la paroi avant (40), et forme une surface d'appui (82) pointant vers le couvercle (58).

5. Dispositif de charge de bordure ou de bord de trottoir (18) pour charger un accumulateur d'énergie (30) d'un véhicule à propulsion électrique (32) selon la revendication 3,
**caractérisé en ce que**
l'élément de renfort (74) s'étend au moins depuis le côté supérieur (78) de la surface de paroi intérieure (54) de la paroi avant (40) jusqu'au fond (36) le long de la surface de paroi intérieure (54).

6. Dispositif de charge de bordure ou de bord de trottoir (18) pour charger un accumulateur d'énergie (30) d'un véhicule à propulsion électrique (32) selon l'une des revendications précédentes,
**caractérisé en ce que**
l'élément de renfort (74) présente la plaque de renfort (76) et deux plaques latérales (84) s'étendant depuis les extrémités de la plaque de renfort (76), lesquelles s'étendent le long d'une surface de paroi intérieure (56) des parois latérales (38).

7. Dispositif de charge de bordure ou de bord de trottoir (18) pour charger un accumulateur d'énergie (30) d'un véhicule à propulsion électrique (32) selon l'une des revendications précédentes,
**caractérisé en ce que**
la fixation de l'élément de renfort (74) dans l'élément de base (34) est effectuée par collage ou vissage.

8. Dispositif de charge de bordure ou de bord de trottoir (18) pour charger un accumulateur d'énergie (30) d'un véhicule à propulsion électrique (32) selon l'une des revendications 1 à 6,
**caractérisé en ce que**
la fixation de l'élément de renfort (74) est effectuée par des entretoises sur l'élément de renfort (74), qui dépassent dans l'élément de base (34).

9. Dispositif de charge de bordure ou de bord de trottoir (18) pour charger un accumulateur d'énergie (30) d'un véhicule à propulsion électrique (32) selon l'une des revendications précédentes,
**caractérisé en ce que**
l'espace de réception (42) est délimité par une paroi arrière (90) en métal, qui est fixée sur des découpes (91) sur des surfaces arrière (92) des parois latérales (38) et du fond (36).

10. Dispositif de charge de bordure et de bord de trottoir (18) pour charger un accumulateur d'énergie (30) d'un véhicule à propulsion électrique (32) selon l'une des revendications 2 à 9,
**caractérisé en ce que**
l'élément de base (34) présente une section de paroi arrière (93), qui s'étend du fond (36) de l'élément de base (34) sur un tiers à trois quarts de la hauteur de l'élément de base (34) vers le haut en direction du couvercle (58).

11. Dispositif de charge de bordure ou de bord de trottoir (18) pour charger un accumulateur d'énergie (30) d'un véhicule à propulsion électrique (32) selon l'une des revendications 2 à 10,
**caractérisé en ce que**
le couvercle (58) recouvre complètement un bord réalisé dans l'état monté entre le côté supérieur (62) et la surface de paroi extérieure (41) de la paroi avant (40) au moins le long de l'extension longitudinale de l'espace de réception (42).

12. Dispositif de charge de bordure ou de bord de trottoir (18) pour charger un accumulateur d'énergie (30) d'un véhicule à propulsion électrique (32) selon l'une des revendications 2 à 11,
**caractérisé en ce que**
le couvercle (58) repose contre la paroi avant (40), les parois latérales (38) et/ou l'élément de renfort (74) en intercalant un joint d'étanchéité ou une couche d'élastomère (66).

13. Dispositif de charge de bordure ou de bord de trottoir (18) pour charger un accumulateur d'énergie (30) d'un véhicule à propulsion électrique (32) selon l'une des revendications précédentes,
**caractérisé en ce que**
une ouverture (50) est réalisée sur le fond (36) de l'élément de base (34), à travers laquelle un câble d'alimentation en énergie (22) dépasse dans l'espace de réception (42) vers une unité électronique (46) ou une prise de charge (24).

14. Dispositif de charge de bordure ou de bord de trottoir (18) pour charger un accumulateur d'énergie (30) d'un véhicule à propulsion électrique (32) selon l'une des revendications précédentes,
**caractérisé en ce que**
une ouverture d'évacuation (52) est réalisée sur le fond (46) de l'élément de base (34), par laquelle de l'eau peut être évacuée de l'espace de réception (42).

15. Dispositif de charge de bordure ou de bord de trottoir (18) pour charger un accumulateur d'énergie (30) d'un véhicule à propulsion électrique (32) selon l'une des revendications précédentes,
**caractérisé en ce que**
l'élément de renfort (74) est en métal ou en une matière plastique renforcée par des fibres.
